# EUROPÄISCHE PATENTANMELDUNG

(11) **EP 2 279 910 A1**
(43) Veröffentlichungstag der Anmeldung: **02.02.2011**
(21) Anmeldenummer: 10007759.3
(22) Anmeldetag: 27.07.2010
(51) Int. Cl.: B60R 7/06, B60R 11/02

(54) **Monitor mit Monitorhalter**

(30) Priorität: 27.07.2009 DE 202009010194 U
(71) Anmelder: Dometic WAECO International GmbH, 48282 Emsdetten (DE)
(72) Erfinder: Kiewe, Rolf, gnt. König, 48282 Emsdetten (DE); Heseleit, Martin Rudi, 48282 Emsdetten (DE)
(74) Vertreter: GROSSE SCHUMACHER KNAUER VON HIRSCHHAUSEN

(57) **Zusammenfassung**

Monitor mit einem verstell- und/oder verschwenkbaren Monitorhalter zum lösbaren Halten des Monitors (10) an einer Fahrzeugkonsole (30) und zum lösbaren elektrischen Verbinden des Monitors (10) mit einer elektrischen Verbindungs- und/oder Datenleitung. Der Monitorhalter (20) und der Monitor (10) sind mit miteinander korrespondierenden ersten und zweiten Schiebeführungen (12, 22) von ausreichender Länge zum Halten des Monitors in einer Anschlagposition versehen. Um den Monitor auf einfache Weise aus seiner Halterung am Fahrzeug fortnehmen und wieder einsetzen zu können, wird vorgeschlagen, dass den Schiebeführungen (12, 22) miteinander korrespondierende erste und zweite Endanschläge (14, 24) zugeordnet sind, und dass den Endanschlägen (14, 24) miteinander korrespondierende elektrische erste und zweite Steckverbinder oder Koppler (16, 26) für Signale, elektrische Spannungen oder Daten derart zugeordnet sind, dass in Folge des Einschiebevorganges der ersten in die zweite Schiebeführung vor oder unmittelbar bei Erreichen der Endanschlagposition die elektrische Kontaktierung der ersten und zweiten Steckverbinder oder Koppler (16, 26) erfolgt und der Monitor und die elektrische Verbindungs- und/oder Datenleitung (40) somit elektrisch gekoppelt werden, wobei das Lösen in umgekehrter Reihenfolge abläuft.

## Beschreibung

### GEBIET DER ERFINDUNG

Die Erfindung betrifft einen Monitor mit einem Monitorhalter mit den Merkmalen des Oberbegriffs des Anspruchs 1. Demnach ist vorgesehen, dass der Monitorhalter zum lösbaren Halten des Monitors an einer Fahrzeug-Konsole und zum lösbaren elektrischen Verbinden des Monitors mit einer elektrischen Verbindungs- und/oder Datenleitung ausgestaltet ist.

### TECHNOLOGISCHER HINTERGRUND

Monitore in Fahrzeugen werden inzwischen für verschiedenste Zwecke eingesetzt, und zwar nicht nur für Navigationssysteme oder als Multifunktionseinrichtung für Telefonie, Fahrzeugdaten und Soundsysteme, sondern auch im Zusammenhang mit Rückfahrkameras für größere unübersichtlichere Fahrzeuge wie Vans, Wohnmobile oder LKWs. Überwiegend werden Nachrüstlösungen eingesetzt, die demzufolge für viele Fahrzeuge passend sein müssen. Hierzu wird der Monitorhalter an einer beliebigen Befestigungsstelle im Fahrzeug (Fahrzeug-Konsole) mit der Fahrzeugkonsole verbunden und der Monitor wird mit dem Monitorhalter lösbar gekoppelt. Dabei ist der Monitorhalter in der Regel mehrachsig verstellbar ausgeführt, um der Einbauposition im Fahrzeug und den ergonomischen Anforderungen des Fahrzeugführers zu genügen. Zur elektrischen Kopplung, d.h. Verbindung mit einer Verbindungsleitung, wie zur Spannungsversorgung, Signal- oder Datenübertragung, wird ein flexibles Verbindungskabel über eine Steckverbindung direkt mit dem Monitor gekoppelt. Das hat wegen der gängigen Miniaturisierung solcher Steckverbindungen in der Regel vor dem Verbinden des Monitors mit dem Monitorhalter zu geschehen.

Vereinzelt werden auch Systeme am Markt angeboten, bei denen die Verbindungsleitung in eine Buchse des Monitorhalters eingesteckt wird. Der Monitorhalter wiederum wird beim mechanischen Verbinden mit dem Monitor gleichzeitig elektrisch kontaktiert. Es sind also zwei Steckverbindungen und eine Spannungs- und/oder Datenleitung im oder am Monitorhalter erforderlich, um den Monitor elektrisch kontaktieren zu können. Das mechanische und elektrische Kopplen zwischen Monitorhalter und Monitor erfolgt praktisch gleichzeitig, so dass das notwendige Einfädeln der elektrischen und mechanischen Verbinder auf engem Raum und in einem einzigen Schritt zu erfolgen hat. Durch diese Manipulation wird, zumeist und fast unvermeidlich, auch die einmal eingestellte Monitorposition ungewollt wieder verändert.

Die elektrische Kontaktierung leidet unter dieser Manipulation mechanisch. Auch im laufenden Betrieb werden mechanische Kräfte, wie Vibrationen, auf die elektrische und nicht nur auf die mechanische Verbindung zwischen Monitor und Monitorhalter übertragen.

Monitor- oder Gerätehalterungen unterschiedlicher Ausführungen, bei denen diese Probleme auftreten, sind unter anderem aus der DE 10 2008 014 142 A1 und der EP 0 795 437 A3 bekannt.

So offenbart die DE 10 2008 014 142 A1 einen Gerätehalter zum Einbau in dem vorderen Teil einer Mittelkonsole eines Fahrzeugs, bei dem ein elektromechanisch verriegelbarer Gerätehalter an Lagerzapfen drehbar in einem Fach der Fahrzeug-konsole gelagert ist. Der Gerätehalter umfasst oberseitig eine schachtförmige Aufnahme für ein Gerät wie etwa einen Monitor und unterseitig Steckverbinder zur Kontaktierung des Monitors.

Eine Schiebeführungen umfassende Halterung für Elektrogeräte mit oder ohne Anzeigedisplay, welche in einem Handschuhfach eines Fahrzeugs vorgesehen ist, kann der EP 0 795 437 A2 entnommen werden. Zum Einführen des Elektrogerätes in das Handschuhfach sind korrespondierende Schiebeführungen vorgesehen. Im Bereich des Endes der Schiebeführungen sind elektrische Steckverbinder oder Koppler vorgesehen.

Der DE 10 2005 058 113 A1, von der die Erfindung ausgeht, kann schließlich eine Unterhaltungseinrichtung für Fahrzeuge entnommen werden, die ein an einer Kopfstütze im Fahrzeug lösbar befestigbares verstell- oder verschwenkbares Aufnahme-Gehäuse für einen Monitor umfasst. Der Monitor wird in das Aufnahme-Gehäuse eingeschoben und dort befestigt. Anschlusskontakte des Monitors sind nur durch eine seitliche Öffnung im Gehäuse nach dem Einsetzten oder vor dem Herausnehmen des Monitors zugänglich. Es bedarf daher einer Abfolge mehrerer Handgriffe, um einen mit einem weiteren Gerät elektrisch verbundenen oder zu verbindenden Monitor einzusetzen oder aus dem Gehäuse herauszunehmen.

### DARSTELLUNG DER ERFINUNG

Davon ausgehend liegt der Erfindung das Problem zugrunde, einen Monitor auf einfache Weise aus seiner Halterung am Fahrzeug fortnehmen und wieder einsetzen zu können.

Zur Lösung dieser Aufgabe wird ein Monitor mit einem Monitorhalter mit den Merkmalen des Anspruchs 1 vorgeschlagen. Demnach ist vorgesehen, dass der Monitorhalter und der Monitor mit miteinander korrespondierenden ersten und zweiten Schiebeführungen von ausreichender Länge zum Halten des Monitors in einer Anschlagposition versehen sind. Des Weiteren ist vorgesehen, dass den Schiebeführungen miteinander korrespondierende erste und zweite Endanschläge des Schiebeweges zugeordnet sind. Ferner sind den Endanschlägen miteinander korrespondierende elektrische erste und zweite Steckverbinder oder Koppler für Signale, elektrische Spannungen oder Daten zugeordnet, und zwar derart, dass in Folge des Einschiebevorgangs der ersten in die zweite Schiebeführung vor oder unmittelbar beim Erreichen der Endanschlagposition die elektrische Kontaktierung der ersten und zweiten Steckverbinder erfolgt und der Monitor und die elektrische Verbindungs- und/oder Datenleitung somit elektrisch gekoppelt werden. Das Lösen des Monitors vom Monitorhalter läuft in umgekehrter Reihenfolge ab. Durch die Erfindung wird eine Entkopplung von mechanischer und elektrischer Verbindung zwischen dem Monitor und dem Monitorhalter in der Weise erreicht, dass der Benutzer sich nur noch auf das mechanische Verbinden zwischen dem Monitor und dem Monitorhalter konzentrierten muss, während die elektrische Kontaktierung allein durch das fortgesetzte Einschieben zwischen den korrespondierenden Schiebeführungen bewirkt wird. Darüber hinaus wird erreicht, dass die eingestellte Sollpositionierung des Monitors durch den Koppelvorgang nicht verändert werden muss. Des Weiteren muss keine Konzentration auf die elektrische Steckverbindung gerichtet werden. Mechanische Belastungen der Steckverbindung werden vermieden.

Es ist nun auf verschiedene Weise möglich, die Erfindung auszuführen. Grundsätzlich ist es möglich, die elektrischen Steckverbinder oder Koppler als Endanschläge zu verwenden. Gleichwohl werden die mechanischen Kräfte vorzugsweise von den korrespondierenden Schiebeführungen und/oder gesonderten Anschlägen übernommen.

Zur mechanisch lastfreien elektrischen und/oder datentechnischen Kontaktierung zwischen dem Monitor und der Verbindungsleitung kann vorgesehen sein, dass die ersten und zweiten Endanschläge derart angeordnet sind, dass sie im Verein mit den ersten und zweiten Schiebeführungen die ersten und zweiten Steckverbinder oder Koppler im Kontaktzustand von mechanischen Lasten des Monitors ganz oder weitgehend freihalten.

Um Vibrationen und andere Belastungen, die von der Fahrzeugkonsole ausgehen, von der Steckverbindung oder dem Koppler zum Monitor besser fernzuhalten, ist vorgesehen, die ersten und zweiten Endanschläge miteinander lösbar zu verrasten. Dadurch wird ein unbeabsichtigtes Lösen der mechanischen und/oder elektrischen Verbindung unterbunden.

Um eine Verrastung zwischen Monitor und Monitorhalter auf einfache Weise wieder lösen zu können, ist vorgesehen, dass zumindest eine der Schiebeführungen, vorzugsweise die halterseitige Schiebeführung, einen Einführbereich mit einer den Einführbereich überragenden Handhabe zum Aufheben der Rastverbindung der Endanschläge aufweist. Bevorzugt überragt die Handhabe das freie Ende der halterseitigen Schiebeführung. Dadurch können auch größere Rückstellkräfte zwischen den verrastenden Endanschlägen überwunden werden.

Grundsätzlich kann der Monitorhalter einstückig ausgeführt sein, d.h. mit allen ihm zugedachten Funktionen ausgestattet sein. Um eine bessere Adaptierung bzw. den Einsatz unterschiedlicher Sockelteile des Monitorhalters zu ermöglichen, wird vorgeschlagen, dass der Monitorhalter zumindest zweiteilig ausgeführt ist und die halterseitige zweite Schiebführung samt dem zweiten Endanschlag und dem zweiten Steckverbinder oder Koppler zu einem eigenständigen Kupplungsteil zusammengefasst sind, welches mit mindestens einem eigenständigen Sockelteil des Monitorhalters mechanisch lösbar verbindbar ist.

Um den Nachrüstcharakter gattungsgemäßer Monitoren mit Monitorhalter besser zu kaschieren und/oder um ein unbeabsichtigtes Berühren des Positionseinstellers für den Monitor am Monitorhalter und damit ein ungewolltes Verstellen zu vermeiden, wird ferner vorgeschlagen, eine die Schiebeführungen freilassende Haube zum lösbaren Verkleiden von Verstellelementen des Monitorhalters vorzusehen. Damit kann ohne sonstige Verstellungen der Monitor auf einfache Weise aus dem Monitorhalter herausgenommen und wieder mit ihm zusammengefügt werden, wobei gleichzeitig die elektrische Kopplung und Entkopplung erfolgt.

Grundsätzlich ist es möglich, den Monitorhalter dem Stand der Technik entsprechend über eine eigene Steckverbindung mit der Verbindungsleitung zu verbinden. Um Doppelkontaktierungen und damit verbundene Fehlerquellen zu unterbinden, wird vorgeschlagen, dass der Steckverbinder oder Koppler und die damit verbundene Verbindungsleitung in den Monitorhalter eingesetzt ist, so dass die Versorgungsspannung, das elektrische Signal oder die Daten aus der Verbindungsleitung unmittelbar an dem Steckverbinder oder Koppler anstehen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Monitors und eines Monitorhalters dargestellt ist. Auch einzelne Merkmale der Ansprüche oder der Ausführungsformen können mit anderen Merkmalen anderer Ansprüche und Ausführungsformen kombiniert werden.

### DETAILLIERTE FIGURENBESCHREIBUNG

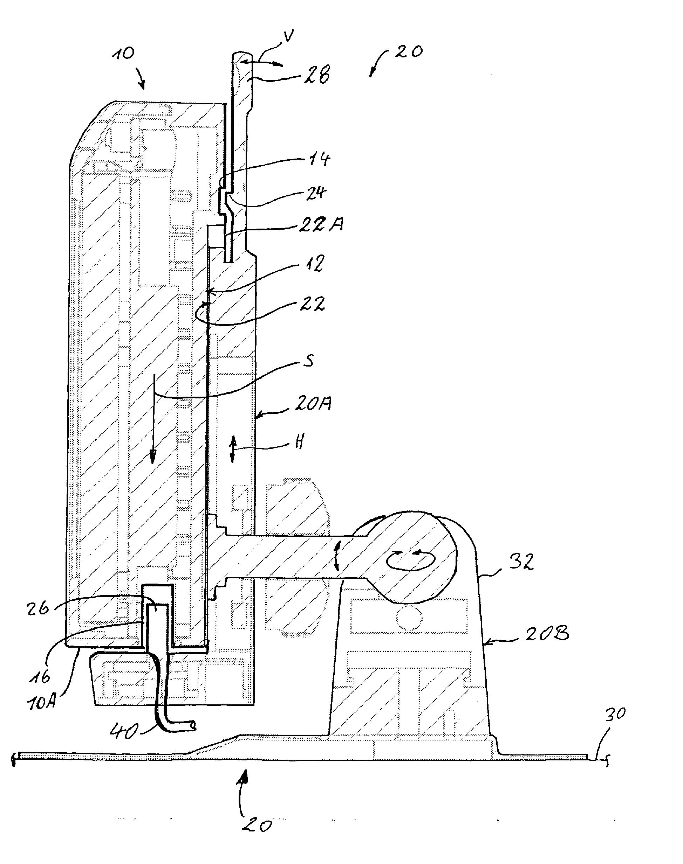

Die Figur zeigt eine schematisierte Vertikalschnittdarstellung durch einen Monitor mit Monitorhalter entlang einer vertikalen Mittellinie, wobei nur die wesentlichen Teile in ausgezogenen Linien dargestellt sind. Ein an sich bekannter LCD-Monitor 10 weist auf seiner Rückseite mittig eine vertikal erstreckte erste Schiebeführung 12 auf, die sich von etwa der Monitorunterkante 10A etwa ¾ der Monitor-Höhe auf seiner Rückseite erstreckt und welche der lösbaren mechanischen Verbindung mit einem insgesamt mit 20 bezeichneten Monitorhalter auf der Rückseite des Monitors dient. Der Monitorhalter 20 ist zweiteilig und besteht aus einem Sockelteil 20B und einem Kupplungsteil 20A. Das Sockelteil 20B kann auf einer bei 30 angedeuteten Fahrzeugkonsole befestigt werden und gestattet in an sich bekannter Weise ein Verschwenken des mit dem Monitorhalter verbundenen Monitors in eine für den Benutzer geeignete Stellung, wobei es auf die Einzelheiten der Verstellbarkeit vorliegend nicht ankommt.

Das Sockelteil und das Kupplungsteil des Monitorhalters 20 sind in dem dargestellten und insoweit bevorzugten Ausführungsbeispiel lösbar miteinander verbindbar, wobei eine Höhenverstellbarkeit des Kupplungsteils 20A bezüglich des Sockelteils 20B durch den Doppelpfeil H angedeutet ist.

Der Monitorhalter 20 weist auf seiner dem Monitor 10 zugewandten Seite eine zweite Schiebeführung 22 auf, die mit der Schiebeführung 12 des Monitors 10 korrespondiert. Der Einführbereich 22A befindet sich am oberen Ende der zweiten Schiebeführung 22, so dass die Schiebeführung 12, 22 über etwa ¾ der Höhe des Monitors 10 wirksam ist. Die Verschiebbarkeit des Monitors 10 bezüglich des Monitorhalters 20, wird durch eine Anschlagspaarung 14, 24 begrenzt. Hierzu ist im vorliegenden Fall eine etwa horizontale Leiste auf der dem Monitor zugewandten Seite des Monitorhalters vorgesehen, die in eine korrespondierende Nut auf der Monitorrückseite rastend eingreift, sobald der Monitor entsprechend weit in die Schiebeführung eingeschoben worden ist. Ein nachfolgendes Lösen zum Wiederentnehmen des Monitors aus dem Monitorhalter ist mittels einer den Monitor 10 an dessen Oberkante überragenden Handhabe 28 des Monitorhalters durch Verschwenken (Doppelpfeil V) möglich.

Der Monitor 10 einerseits und das Kupplungsteil 20A des Monitorhalters 20 andererseits weisen jeweils in ihrem unteren Bereich miteinander korrespondierende erste und zweite Steckverbinder oder Koppler 16 bzw. 26 auf. Der am Monitorhalter 20 vorgesehene Steckverbinder/Koppler 26 ist unmittelbar mit einer Verbindungs-/Datenleitung 40 verbunden und ortsfest an einem etwa horizontalen Schenkel des Kupplungsteils 20A an dessen unterem Ende in Ausrichtung auf den Monitor 10 angeordnet. Die beiden Steckverbinder oder Koppler 16, 26 sind so aufeinander ausgerichtet, dass sie gegen Ende der mit S bezeichneten Schiebebewegung des Monitors beim Einschieben dessen Schiebeführung 12 in die Schiebeführung 22 des Monitorhalters eine elektrische und/oder datentechnische Kontaktierung zwischen dem ersten Steckverbinder/Koppler 16 und dem zweiten Steckverbinder/Koppler 26 automatisch miteinander gekoppelt werden. Hierbei werden mechanische Lasten von dieser Steckverbinder/Koppler-Kombination durch die korrespondierenden Schiebeführungen 12, 22 und die Anschlagspaarung 14, 24 vermieden.

Der Monitor 10 kann also jederzeit und rasch aus dem Monitorhalter entnommen und wieder in ihn eingeführt werden, ohne dass sich der Benutzer um die elektrische Kontaktierung kümmern muss.

### BEZUGSZEICHENLISTE

- 10: Monitor
- 10A: Monitorunterkante
- 12: erste Schiebeführung
- 14: erster Endanschlag
- 16: erster Steckverbinder oder Koppler
- 20: Monitorhalter
- 20A: Kupplungsteil
- 20B: Sockelteil
- 22: zweite Schiebeführung
- 22A: Einführbereich
- 24: zweiter Endanschlag
- 26: zweiter Steckverbinder / Koppler
- 28: Handhabe
- 30: Fahrzeugkonsole
- 32: Haube
- 40: Verbindungs-/Datenleitung
- H: Höhenverstellung
- V: Verrastungslösen
- S: Schiebebewegung

## Patentansprüche

1. Monitor mit einem verstell- und/oder verschwenkbaren Monitorhalter zum lösbaren Halten des Monitors (10) an einer Fahrzeugkonsole (30) und zum lösbaren elektrischen Verbinden des Monitors (10) mit einer elektrischen Verbindungs- und/oder Datenleitung;
der Monitorhalter (20) und der Monitor (10) sind mit miteinander korrespondierenden ersten und zweiten Schiebeführungen (12, 22) von ausreichender Länge zum Halten des Monitors in einer Anschlagposition versehen,
**dadurch gekennzeichnet, dass**
den Schiebeführungen (12, 22) miteinander korrespondierende erste und zweite Endanschläge (14, 24) zugeordnet sind, und
dass den Endanschlägen (14, 24) miteinander korrespondierende elektrische erste und zweite Steckverbinder oder Koppler (16, 26) für Signale, elektrische Spannungen oder Daten derart zugeordnet sind, dass in Folge des Einschiebevorganges der ersten in die zweite Schiebeführung vor oder unmittelbar bei Erreichen der Endanschlagposition die elektrische Kontaktierung der ersten und zweiten Steckverbinder oder Koppler (16, 26) erfolgt und der Monitor und die elektrische Verbindungs- und/oder Datenleitung (40) somit elektrisch gekoppelt werden, wobei das Lösen in umgekehrter Reihenfolge abläuft.

2. Monitor mit einem Monitorhalter nach Anspruch 1, **dadurch gekennzeichnet, dass** die ersten und zweiten Endanschläge (14, 24) miteinander lösbar verrastbar sind.

3. Monitor mit Monitorhalter nach Anspruch 2, **dadurch gekennzeichnet, dass** zumindest eine der ersten und zweiten Schiebeführungen einen Einführbereich mit einer den Einführbereich überragenden Handhabe (28) zum Aufheben der Rastverbindung der ersten und zweiten Endanschläge (14, 24) aufweist.

4. Monitor mit Monitorhalter nach einem der Ansprüche 1 bis 3, **dadurch gekennzeichnet, dass** die ersten und zweiten Endanschläge (14, 24) derart angeordnet sind, dass sie im Verein mit den ersten und zweiten Schiebeführungen (12, 22) die ersten und zweiten Steckverbinder oder Koppler (16, 26) im Kontaktzustand von mechanischen Lasten des Monitors ganz oder weitgehend freihalten.

5. Monitor mit Monitorhalter nach einem der Ansprüche 1 bis 4, **dadurch gekennzeichnet, dass** der Monitorhalter (20) zumindest zweiteilig ausgeführt ist und die halterseitige zweite Schiebeführung (22) samt dem zweiten Endanschlag (24) und dem zweiten Steckverbinder oder Koppler (26) zu einem eigenständigen Kupplungsteil (20A) zusammengefasst sind und das Kupplungsteil (20A) mit mindestens einem eigenständigen Sockelteil (20B) des Monitorhalters (20) mechanisch lösbar verbindbar ist.

6. Monitor mit Monitorhalter nach einem der Ansprüche 1 bis 5, **gekennzeichnet durch** eine die erste und zweite Schiebeführung (12, 22) freilassende Haube (32) zum lösbaren Verkleiden von Verstellelementen des Monitorhalters (20).

7. Monitor mit Monitorhalter nach einem der Ansprüche 1 bis 6, **dadurch gekennzeichnet, dass** der zweite Steckverbinder oder Koppler ( 26) und die damit verbundene Verbindungsleitung (40) in dem Monitorhalter (20) derart eingesetzt ist, dass die Versorgungsspannung und das elektrische Signal oder die Daten aus der Verbindungsleitung unmittelbar an dem zweiten Steckverbinder oder Koppler (26) anstehen.
